(19) Europäisches Patentamt

European Patent Office

Office européen des brevets

(11) **EP 1 681 819 A1**

(12) **DEMANDE DE BREVET EUROPEEN**

(43) Date de publication:
**19.07.2006 Bulletin 2006/29**

(51) Int Cl.:
*H04L 25/02* (2006.01)  *H04L 25/49* (2006.01)
*H04L 1/06* (2006.01)

(21) Numéro de dépôt: **06100192.1**

(22) Date de dépôt: **10.01.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **12.01.2005 FR 0500289**

(71) Demandeur: **COMMISSARIAT A L'ENERGIE ATOMIQUE**
**75752 Paris 15ème (FR)**

(72) Inventeurs:
• **Abou Rjeily, Chadi**
  **38406 Saint Martin d'Heres (FR)**
• **Daniele, Norbert**
  **38330 Montbonnot (FR)**
• **De Rivaz, Sébastien**
  **73800 Villard d'Hery (FR)**

(74) Mandataire: **Poulin, Gérard et al**
**Brevatome**
**3, rue du Docteur Lancereaux**
**75008 Paris (FR)**

(54) **Système de communication multi antennes**

(57) L'invention concerne un procédé d'apprentissage d'un système de communication ultra - large bande à M antennes de transmissions et N antennes de réception et dans lequel l'information est modulée sur L positions possibles, comportant :

a) transmettre une série de $N_{seq}$ impulsions d'apprentissage, de chaque antenne d'émission vers toutes les antennes de réception,

b) pour chaque antenne de réception j, estimer les M réponses composites des séries d'impulsions émises qui arrivent à cette antenne de réception j, chaque réponse composite étant estimée en éliminant les effets des autres antennes,

c) estimer les corrélations (R) entre les différents canaux.

FIG. 17

EP 1 681 819 A1

**Description**

**DOMAINE TECHNIQUE ET ART ANTÉRIEUR**

L'invention concerne un système de communication radio sans fil basé sur la technologie multi antennes Ultra Large Bande (« MA ULB » ou « MIMO UWB » en Anglais pour Multiple Input Multiple Output Ultra Wide Band). Cette technologie repose sur l'émission de signaux dont le rapport entre la largeur de la bande et la fréquence centrale est supérieure à 20% [1] ou dont la bande est supérieure à 500MHz. L'invention propose un système de communication avec M antennes de transmission et N antennes de réception.

Les applications de l'invention sont du type réseau personnel et réseaux locaux sans fils très haut débit (quelques centaines de Mbits/s) ; typiquement, des terminaux communicants équipés avec plusieurs antennes capables de répondre aux demandes des services multimédia illustrent ce type d'applications.

Aujourd'hui la technique MIMO est bien mature dans plusieurs domaines. Pour les systèmes bande étroite, plusieurs solutions ont été proposées. Alamouti [7] a construit le premier code spatio-temporel avec 2 antennes de transmissions ; ce code transmet avec un débit d'1 symbole par utilisation du canal (même débit que les systèmes mono antennes ou « SISO » pour « Single Input Single Output » en Anglais). Tarokh et al. [8] ont généralisé ce code pour un système avec M≥2 antennes de transmissions ; des codes avec des débits de ½ et ¾ ont été proposés. En [9], Damen a proposé une nouvelle famille de codes basés sur la transformation de Hadamard et sur les constellations tournées. En [10], Foschini a proposé un système sans codage où M antennes transmettent des symboles indépendants, la détection étant assurée par N antennes de réception tel que N ≥M.

Ces codes ont été adaptés aux systèmes larges bande. L'approche la plus générale consiste à utiliser la technique OFDM (pour Orthogonal Frequency Division Multiplexing en Anglais). Le canal large bande est alors converti en plusieurs canaux bandes étroites parallèles et indépendants ; les codes spatio-temporels sont ensuite appliqués sur chacun de ces canaux [11]. Une autre approche consiste à appliquer ces codes sur des blocs de symboles pour éliminer l'interférence inter symboles introduit par le canal large bande [12].

La technique de communication ultra large bande (ULB ou UWB en lange Anglaise) s'impose comme une technique clé pour les liaisons radio haut débit dans les environnements type « indoor ». Cette technique consiste à transmettre des impulsions de courte durée, de l'ordre de la nanoseconde. Dans la plupart des cas, l'information est codée via la position de ces impulsions (PPM pour Pulse Position Modulation en Anglais). Des sauts temporels (TH pour Time Hopping en Anglais) rendent l'accès multiple possible [2].

Pour les applications hauts débit, la plupart des récepteurs peuvent être classés dans l'une des catégories suivantes :

- Récepteurs de type RAKE ; où, sur N voies parallèles (correspondant à un RAKE d'ordre N), le signal reçu est corrélé avec N versions retardées et convenablement pondérées de la forme d'impulsion ; (la connaissance de ces retards et amplitudes est acquise pendant une phase d'apprentissage) [3].
- Récepteurs de type corrélateurs ; où pour détecter les symboles émis, le récepteur corrèle le signal reçu avec un signal de référence ; le signal de référence est construit pendant la phase d'estimation du canal [4], [5].

Plusieurs caractéristiques inhérentes aux systèmes ULB deviennent très rapidement limitantes sur la performance et le débit de tels systèmes. Parmi ces caractéristiques on cite l'effet du canal (atténuation, nombre de multi trajets, étalement du canal, ...), le rapport signal sur bruit (SNR), l'interférence d'autres systèmes, ....etc.

Une façon de s'affranchir de ces limitations consiste à appliquer les techniques de traitement multi antennes « MIMO » aux systèmes « UWB » ; ces techniques sont en effet capables d'augmenter la capacité et d'améliorer les performances des systèmes de communications [6].

Le traitement adopté en [4] ne peut pas être généralisé pour les systèmes MIMO. Dans cette situation, chaque antenne de transmission va réagir comme une source d'interférence vis à vis des autres antennes; la méthode consistant à détecter les symboles émis par chaque antenne d'une façon indépendante ou parallèle va introduire des fortes détériorations sur les performances du système. La détection des symboles émis par l'ensemble des antennes de transmission doit être faite de façon conjointe et la détection des symboles émis par une antenne doit prendre en compte l'influence des symboles émis par les autres antennes. La mise en parallèle de plusieurs systèmes [4] n'est pas suffisante et une approche bien adaptée au problème doit être adoptée.

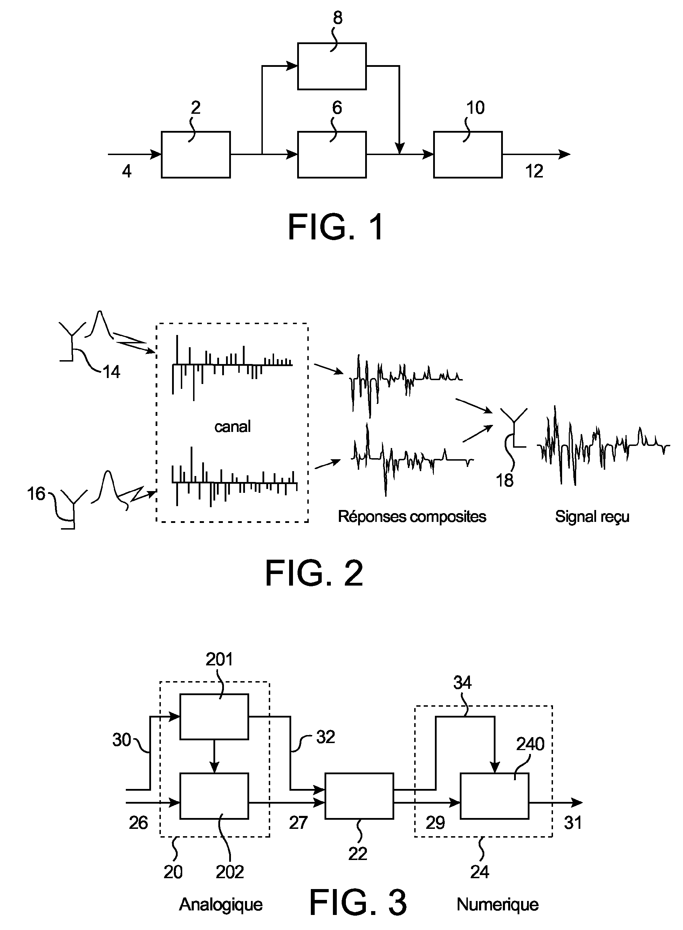

La figure 1 représente schématiquement un récepteur d'un système MIMO bande étroite. Un tel récepteur comporte des moyens 2 de discrétisation d'un signal reçu 4, des moyens 6 de filtrage, des moyens 8 d'estimation de canal et des moyens 10 de décision pouvant sortir des symboles reconstitués 12.

Pour les systèmes bandes étroites, un canal physique peut être modélisé par une variable aléatoire complexe qui représente l'atténuation et le déphasage introduit par le canal. Pour un système avec M antennes de transmission et N antennes de réception, le canal MIMO peut être modélisé par une matrice « H » de dimension (M,N).

L'estimation du canal consiste à estimer MN valeurs. Une fois estimée, la matrice « H » va servir à la détection des symboles émis ; plusieurs techniques de décisions sont alors possibles ; on peut citer par exemple les techniques du « maximum de vraisemblance », V-BLAST, forçage à zéro...

Les systèmes MIMO OFDM sont une généralisation de la méthode précédente, où le schéma de la figure 1 est appliqué à chaque sous bande d'une façon indépendante.

La figure 2 est un exemple d'un système MIMO UWB avec 2 antennes de transmission et une antenne de réception 18. Le récepteur doit être capable de détecter les 2 symboles émis par les antennes de transmission à partir du signal reçu.

Pour les systèmes UWB, le signal reçu est la superposition de plusieurs versions du signal émis atténuées et retardées. À cause de l'étalement et de la densité des trajets multiples les sorties et les entrées du canal ne sont plus reliées par une relation simple de type produit et la notion de matrice du canal « H », qui rend la détection possible dans les systèmes bandes étroites, n'existe plus. C'est dans ces conditions défavorables que le récepteur doit être capable de séparer et détecter conjointement les signaux émis par l'ensemble des antennes de transmissions.

Dernièrement la technique MIMO a été appliquée dans le contexte de communication UWB [13],[14],[15]. La particularité de ces systèmes (Impulsions de courtes durées qui occupent une bande passante de l'ordre de quelques GHz) rendent le traitement bien particulier, et les techniques de codage spatio-temporel large bande (quelques dizaines de MHz) ne peuvent pas être généralisées pour les cas UWB.

La première approche dans ce domaine a été faite en [13]. Le code d'Alamouti [7] a été appliqué sur les systèmes impulsionnels (« Impulse Radio » en Anglais) pour une modulation PPM. Le système proposé est tout analogique et un traitement linéaire est suffisant pour assurer une détection optimale. Mais, dans cette technique, contrairement à la présente invention, qui suppose un contexte de canal multi trajets, le canal était considéré comme constitué d'un seul trajet et la construction du récepteur était basée sur cette hypothèse.

Le même système analogique (avec 2 antennes de transmissions) a été amélioré par les mêmes auteurs en [14]. Le canal est alors constitué de plusieurs multi trajets et le récepteur utilise une technique de type « râteau ou RAKE » pour collecter les trajets.

Mais ce système est incapable d'augmenter le débit de l'émetteur ; c'est une caractéristique du code d'Alamouti, qui transmet toujours 1 symbole par utilisation du canal (2 antennes de transmission et un code sur 2 trames temporelles). Et, de plus, une perte du débit est attendue si on généralise cette méthode pour M>2 antennes de transmission [8]. Le gain en performance (gain en diversité dans la littérature MIMO) qu'apporte ce système dépend du nombre de doigts du RAKE, il est maximal pour un RAKE d'ordre 1 et diminue lorsque le nombre de doigts du récepteur augmente. Mais, en pratique, le nombre de doigts du RAKE doit être suffisamment élevé pour capter plus d'énergie [3]. Dans ce contexte, le code proposé perd de son intérêt et il n'apporte rien de plus en comparaison avec les systèmes SIMO (une antenne de transmission et N antennes de réception). Le même raisonnement tient pour un récepteur de type « corrélation ».

Enfin, en [15] les caractéristiques des canaux MIMO UWB ont été étudiées, et en particulier la variation des fonctions d'inter et d'auto corrélation des canaux en fonction de la bande passante et de la distance entre les antennes ; ces études sont basées sur une généralisation du modèle du canal trouvé en [16].

La figure 3 est un schéma bloc du récepteur proposé en [15]. Les traits 30, 32, 34 représentent les symboles d'apprentissage qui sont connus au récepteur, et les traits 26, 27, 29, 31 représentent les symboles d'information. Un tel dispositif comporte en outre des moyens 201 d'estimation de matrice de canal, de moyens 202 de déconvolution temporelle, des moyens 22 d'échantillonnage, et des moyens 240 de détection de maximum de vraisemblance.

En plus, la performance de la modulation antipodale {-1,+1} a été étudiée. Le système proposé consiste en M antennes de transmission et N antennes de réception, les symboles émis ne sont pas codés (flux indépendants des données) et la détection est faite avec un détecteur de type maximum de vraisemblance (« ML » pour Maximum Likelihood en Anglais). Mais ce système proposé n'est adapté qu'à la modulation antipodale (le récepteur est un détecteur du signe) et il ne peut pas être généralisé pour les modulations PPM et pour le cas multi-utilisateurs. De plus, les auteurs ont fait l'hypothèse que le récepteur a une connaissance parfaite de la matrice du canal et donc aucun système d'estimation n'a été proposé.

En outre, le récepteur ML fait une recherche exhaustive sur toutes les combinaisons possibles des symboles émis, il a donc une complexité qui augmente exponentiellement avec le nombre d'antennes de transmissions. Cette complexité impose une limite sur le nombre d'antennes de transmission et par conséquent une limite sur le débit binaire du système.

Pour conclure, le système proposé en [15], et illustré en figure 3, présente les limitations suivantes :

1- L'estimation du canal est faite en analogique ; du fait de la complexité d'une telle approche, aucun système d'estimation est proposé.

2- Le filtrage adapté est sensé être réalisé en analogique. Cette approche reste optimale du point de vu théorique, mais, pratiquement, pour le moment, aucun système UWB n'est capable de réaliser cette tache en analogique à cause de l'étalement du canal UWB.

3- L'échantillonnage du signal après le filtrage adapté rend ce système incapable de détecter des symboles modulés en position.

## EXPOSÉ DE L'INVENTION

L'invention propose une architecture d'un nouveau système MIMO UWB pour les communications radio impulsionnelles avec une modulation PPM, avec ou sans polarité.

En particulier, l'invention concerne un système non codé avec M antennes de transmission et N antennes de réception pour n'importe quelles valeurs de M et N.

L'invention concerne d'abord un procédé d'apprentissage d'un système de communication ultra - large bande à M ($M \geq 2$) antennes de transmissions et N ($N \geq 1$ ou 2) antennes de réception et dans lequel l'information est modulée sur L positions possibles, comportant :

a) Transmettre une série de $N_{seq}$ impulsions d'apprentissage, de chaque antenne d'émission vers toutes les antennes de réception.

b) Pour chaque antenne de réception j, estimer les M réponses composites $(h_1^{(i,j)}, h_2^{(i,j)}, ...., h_{Nech}^{(i,j)})$ des séries d'impulsions émises qui arrivent à cette antenne de réception j, chaque réponse étant égale à la convolution de la série d'impulsions d'apprentissage émises avec la fonction de transfert du canal de propagation de l'antenne d'émission i vers l'antenne de réception j, chaque réponse composite étant estimée en éliminant les effets des autres antennes.

c) Estimer les corrélations entre les différents canaux.

Chaque série d'impulsions émise par une antenne d'émission peut résulter du produit terme à terme d'une séquence connue ($S_1$, $S_2$, ....$S_{Nseq}$) et commune à toutes les antennes d'émission et d'un code ($c_k^{(i)}$) (k = 1,2,...$N_{seq}$) de parité propre à chaque antenne d'émission i, les codes de parité étant orthogonaux deux à deux entre eux.

L'étape b) peut alors comporter, pour chaque canal définit par une antenne d'émission i (i=1,..., M) et arrivant vers l'antenne de réception j :

- un échantillonnage en $N_{ech}$ échantillons de chacune des $N_{seq}$ trames d'impulsions reçues, $r_k^{(i)}$ désignant le k[ième] échantillon du signal reçu par la j[ième] antenne,
- puis le calcul de la moyenne

$$h_n^{(i,j)} = (\Sigma_{k=1}^{k=Nseq} c_k^{(i)} \times r_{n + (k-1)Nech}^{(j)})/N_{seq}.$$

Selon un mode de réalisation, l'étape c) comporte l'estimation d'une matrice de corrélation (R(j)) pour chaque antenne de réception, les N matrices étant ensuite ajoutées pour former une matrice de corrélation totale (R).

L'étape c) peut être réalisée à partir des M réponses composites.

Pour réaliser l'étape c), on peut :

- pour chaque antenne de réception j, calculer une matrice de corrélation pour chaque paire de canaux (i,j), (i',j), où i et i' désignent des antennes d'émission quelconques,
- pour chaque antenne de réception j, calculer la matrice de corrélation R(j),
- calculer une matrice de corrélation totale (R) en sommant les matrices de corrélation individuelles R(j) de chaque antenne de réception j.

La matrice R(j) est de taille (LxM, LxM), et est constituée des matrices $R^{(\alpha,j)(\beta,j)}$

$$R^{(j)} = \begin{bmatrix} R^{(1,j)(1,j)} & R^{(2,j)(1,j)} & ... & ... & R^{(M,j)(1,j)} \\ \left[R^{(2,j)(1,j)}\right]^T & R^{(2,j)(2,j)} & R^{(3,j)(2,j)} & ... & ... \\ ... & \left[R^{(3,j)(2,j)}\right]^T & R^{(3,j)(3,j)} & ... & ... \\ ... & ... & ... & ... & ... \\ \left[R^{(M,j)(1,j)}\right]^T & ... & ... & ... & R^{(M,j)(M,j)} \end{bmatrix}$$

chacune des matrices $R^{(i,j)(i',j)}$ ayant des termes $r(i, i', j)_{l,c}$ (1 = 1,....L, c = 1,....L) définis par :

- pour 1 = c : $r(i, i', j)_{l,c} = R_0$
- pour 1 > c : $r(j)_{l,c} = R_{l-c}$
- pour 1 < c : $r(j)_{l,c} = R_{-(l-c)}$
  avec :

$$R_0 = \Sigma_{k=1}^{k=Nech} h_k^{(i,j)} h_k^{(i',j)}$$

$$R_{1-c} = \Sigma_{k=1}^{k=Nech-(1-c)NPRI} h_{k+(1-c)NPRI}^{(i,j)} h_k^{(i',j)}$$

$$R_{-(1-c)} = \Sigma_{k=1}^{k=Nech-(1-c)NPRI} h_k^{(i,j)} h_{k+(1-c)NPRI}^{(i',j)}$$

où NPRI désigne le nombre d'échantillons par position nominale de modulation.

L'invention concerne également un procédé de détection de signaux, transmis par des antennes de transmission d'un système de communication ultra - large bande comportant M (M ≥ 2) antennes de transmissions et N (N ≥ 2) antennes de réception et dans lequel l'information est modulée sur L positions possibles, comportant pour chaque antenne de réception j:

a) comparer les réponses composites $\left(h_1^{(i,j)}, h_2^{(i,j)}, ...., h_{Nech}^{(i,j)}\right)$ obtenues pour un signal connu pour chaque canal défini par une antenne d'émission i et une antenne de réception j, avec les séries d'impulsions $\left(r_1^{(j)}, ..... r_{Nech}^{(j)}\right)$ reçues par cette antenne de réception j, chaque impulsion reçue étant égale à la convolution d'une impulsion émise avec la fonction de transfert du canal de propagation de l'antenne d'émission i vers l'antenne de réception j,
b) construire un vecteur d de décision de longueur L.M,
c) estimer les symboles émis par les antennes de transmission à partir du vecteur de décision et de corrélations (R) entre les différents canaux.

Selon un mode de réalisation l'étape b) comporte, pour chaque canal (i,j), le calcul de L variables de décision $d_1^{(i,j)}, d_2^{(i,j)}, ....., d_L^{(i,j)}$ , où :

$$d_1^{(i,j)} = \Sigma_{k=1}^{k=Nech} r_k^{(j)} h_k^{(i,j)}$$

$$d_n^{(i,j)} = \Sigma_{k=1}^{k=Nech-(n)NPRI} r_{k+(n)NPRI}^{(j)} h_k^{(i,j)}$$

pour n = 2,....L,

où NPRI désigne le nombre d'échantillons par position nominale de modulation,

puis le calcul d'un coefficient de décision $d_l^{(i)} = d_l^{(i,1)} + d_l^{(i,2)} + \ldots\ldots\ldots d_l^{(i,N)}$ , et un vecteur de decision

Un tel procédé peut comporter le calcul d'un vecteur a :

$$a \ = \ R^{-1} xd,$$

où R est la matrice de corrélation de dimensions (LM, LM) du système de communication.

Il est en outre possible de déterminer la position nominale de modulation et la polarité du symbole émis par chaque antenne d'émission ou de transmission.

La position nominale de modulation et la polarité du symbole émis par la m[ième] antenne peuvent être déterminés respectivement par la position du maximum du module de a(m), et par le signe de ce maximum, où a(m) est le vecteur de décision correspondant au symbole émis par la m[ième] antenne.

Le vecteur a peut prendre la forme suivante :

$$a = \left[ a^{(1)}, a^{(2)}, \ldots a^{(M)} \right]$$

$$= \left[ \underbrace{a_1^{(1)} \ldots\ldots a_L^{(1)}} \underbrace{a_1^{(2)} \ldots\ldots a_L^{(2)}} \ldots\ldots\ldots\ldots \underbrace{a_1^{(M)} \ldots\ldots a_L^{(M)}} \right]$$

Où $a^{(m)} = \left[ a_1^{(m)} \ldots\ldots a_L^{(m)} \right]$ est un vecteur de décision correspondant au symbole émis par le m[ième] antenne de transmission (m = 1,2,...M).

L'invention concerne également un procédé de communication, de signaux modulés PPM, de type ultra - large bande, à l'aide de M antennes de transmissions et N antennes de réception, comportant :

- un procédé d'apprentissage selon l'invention, tel que décrit ci-dessus,
- une phase de transmission d'un flux de symboles de données,

- puis, pour tout signal transmis, et pour chaque antenne de réception j, une comparaison des réponses composites $\left( h_1^{(i,j)}, h_2^{(i,j)}, \ldots, h_{Nech}^{(i,j)} \right)$ avec des séries $\left( r_1^{(j)}, \ldots\ldots r_{Nech}^{(j)} \right)$ d'impulsions reçues par cette antenne de réception j, chaque impulsion reçue étant égale à la convolution d'une impulsion émise avec la fonction de transfert du canal de propagation de l'antenne d'émission i vers l'antenne de réception j,

- pour chaque canal (i,j), le calcul de L variables de décision $d_1^{(i,j)}, d_2^{(i,j)}, \ldots\ldots, d_L^{(i,j)}$ , où :

$$d_1^{(i,j)} \ = \ \Sigma_{k=1}^{k=Nech} r_k^{(j)} \ h_k^{(i,j)}$$

$$d_n^{(i,j)} \ = \ \Sigma_{k=1}^{k=Nech-(n)NPRI} r_{k+(n)NPRI}^{(j)} \ h_k^{(i,j)}$$

pour n = 2,....L,

où NPRI désigne le nombre d'échantillons par position nominale de modulation,

puis le calcul d'un coefficient de décision $d_l^{(i)} = d_l^{(i,1)} + d_l^{(i,2)} + \ldots\ldots\ldots d_l^{(i,N)}$ , et d'un vecteur de décision

$$d = \left[ \underbrace{d_1^{(1)} \ldots\ldots d_L^{(1)}}, \underbrace{d_1^{(2)} \ldots\ldots d_L^{(2)}} \ldots\ldots \underbrace{d_1^{(M)} \ldots\ldots d_L^{(M)}} \right]$$

Où $d_l^i$ correspond au $l^{\text{ième}}$ coefficient de décision correspondant à la $i^{\text{ième}}$ antenne de transmission.

La phase d'apprentissage peut comporter :

- la transmission d'une séquence par M canaux vers les M antennes de transmission,
- la multiplication terme à terme de la séquence de chaque canal avec une séquence de codes de parités, les codes étant orthogonaux deux à deux entre eux.

La phase de transmission d'un flux de symboles peut comporter :

- le démultiplexage du flux de symboles en M flux correspondant aux M antennes de transmission,
- la modulation en position des symboles et leur transmission aux M antennes de transmission.

De préférence la séparation entre les antennes permet une décorrélation entre les canaux. Par exemple la séparation d entre deux antennes est telle que d/λ > 0,5, où λ est la longueur d'onde correspondant à fréquence centrale.

L'invention concerne également un système de communication, de type ultra - large bande, comportant M antennes de transmissions et N antennes de réception, et :

- des moyens pour estimer, pour chaque antenne de réception j, les réponses composites $(h_1^{(i,j)}, h_2^{(i,j)}, \ldots, h_{Nech}^{(i,j)})$ de séries d'impulsions émises qui arrivent à cette antenne de réception j, chaque réponse étant égale à la convolution de la série d'impulsions émises avec la fonction de transfert du canal de propagation de l'antenne d'émission i vers l'antenne de réception j, chaque réponse composite étant estimée en éliminant les effets des autres antennes,
- des moyens pour estimer les corrélations (R) entre les différents canaux,

- des moyens pour estimer un symbole émis par une antenne d'émission en fonction d'un signal reçu $\left( r_1^{(j)}, \ldots\ldots r_{Nech}^{(j)} \right)$, des réponses composites et des corrélations.

Les moyens pour estimer un symbole émis peuvent comporter en outre des moyens permettant, pour chaque canal i (i=1,..., M) arrivant vers l'antenne de réception j, le calcul de L variables de décision

$d_1^{(i,j)}, d_2^{(i,j)}, \ldots\ldots, d_L^{(i,j)}$ , où :

$$\mathrm{d}_1^{(i,j)} = \Sigma_{k=1}^{k=Nech} \mathrm{r}_k^{(j)} \mathrm{h}_k^{(i,j)}$$

$$\mathrm{d}_n^{(i,j)} = \Sigma_{k=1}^{k=Nech-(n)NPRI} \mathrm{r}_{k+(n)NPRI}^{(j)} \mathrm{h}_k^{(i,j)}$$

pour n = 2 , .... L,
où NPRI désigne le nombre d'échantillons par position nominale de modulation,

puis le calcul d'un coefficient de décision $d_l^{(i)} = d_l^{(i,1)} + d_l^{(i,2)} + \ldots\ldots\ldots d_l^{(i,N)}$ , et d'un vecteur de décision

$$d = \left[ \underbrace{d_1^{(1)} \dots d_L^{(1)}}, \underbrace{d_1^{(2)} \dots d_L^{(2)}} \dots \underbrace{d_1^{(M)} \dots d_L^{(M)}} \right]$$

Où $d_l^i$ correspond au l$^{\text{ième}}$ coefficient de décision correspondant à la i$^{\text{ième}}$ antenne de transmission.

Un tel système de communication peut en outre comporter des moyens pour calculer un vecteur a :

$$\texttt{a = R}^{-1}\texttt{xd,}$$

où R est la matrice de corrélation de dimensions (LM, LM) du système de communication.

Un tel système de communication peut en outre comporter des moyens pour déterminer la position nominale de modulation et la polarité du symbole émis par chaque antenne d'émission ou de transmission.

## BRÈVE DESCRIPTION DES DESSINS

- La figure 1 représente un dispositif récepteur MIMO bande étroite,
- la figure 2 représente des signaux émis entre des antennes d'émission et une antenne de réception,
- la figure 3 représente un dispositif selon l'art antérieur,
- la figure 4 représente un dispositif selon l'invention,
- la figure 5 représente un exemple de trains d'impulsions PPM,
- les figures 6A et 6B représentent une impulsions Ultra large Bande,
- la figure 7 représente un système avec deux antennes selon l'invention pendant une phase d'apprentissage,
- la figure 8 représente un exemple de trains d'impulsions émises pendant la phase d'apprentissage selon l'invention,
- la figure 9 représente un système de transmission selon l'invention, pendant la phase de transmission,
- la figure 10 représente schématiquement la première étape d'estimation d'un procédé selon l'invention,
- les figures 11A - 11D représentent divers signaux (réponse impulsionnelle de deux canaux, trames bruitées reçues en phase d'apprentissage, et estimations composites de deux canaux),
- la figure 12 représente schématiquement un corrélateur mis en oeuvre dans le cadre d'un dispositif selon l'invention,
- la figure 13 représente schématiquement le deuxième étage d'estimation d'un dispositif selon l'invention, pour 3 antennes de transmission et deux antennes de réception,
- la figure 14 représente schématiquement la phase, et les moyens, d'estimation du canal à la sortie de chaque antenne de réception, dans un dispositif selon l'invention,
- la figure 15 représente schématiquement un traitement sur une branche à la sortie d'une antenne de réception pour une modulation PPM, dans le cadre d'un procédé selon l'invention,
- la figure 16 représente schématiquement une première étape de détection, dans le cadre d'un procédé selon l'invention,
- la figure 17 représente schématiquement un récepteur selon l'invention,
- la figure 18 représente la probabilité d'erreur par symbole en fonction du rapport signal sur bruit dans le cas d'un procédé selon l'invention.

## EXPOSÉ DÉTAILLÉ DE MODES DE RÉALISATION PARTICULIERS

Côté émission, un système de communication UWB selon l'invention comporte M (M ≥ 2) antennes d'émission ou de transmission qui peuvent émettre des séquences d'impulsions, de période moyenne d'émission appelée PRP (Pulse Repetition Period), dont la position et/ou la polarité est porteuse d'information.

Lorsque l'information est modulée sur L position possibles, on parle de modulation L_PPM (L_ary Pulse Position Modulation). La séparation temporelle entre deux positions successives de modulation s'appelle PRI (Pulse Repetition Interval).

La séparation entre les antennes d'émission est de préférence suffisamment grande pour assurer une decorrélation entre les canaux, en général cette decorrélation est satisfaite pour une séparation d telle que **$d/\lambda$>0.5,** où $\lambda$ est

la longueur d'onde correspondant à la fréquence centrale. Pour une fréquence centrale de 6GHz, d vérifie donc d>5cm.

Lorsqu'on associe le L_PPM avec une modulation de polarité, chaque symbole émis prend une valeur parmi 2L possibles.

A chaque symbole $S_1$ on associe une position ($\Delta_1$) et une polarité ($p_1$) de la façon suivante :

$$p_1 = 1 \quad ; \quad \Delta_1 = (1-1)\,\text{PRI}$$

pour l+1, 2, ...L

$$p_1 = -1 \quad ; \quad \Delta_1 = (1-L-1)\,\text{PRI}$$

pour l+L+1, L+2,...2L

A la fin de chaque PRI, on peut ajouter un intervalle de garde (ou GAP en Anglais) pour éliminer l'interférence inter symboles en tenant compte de ce GAP ; on aura alors la relation : PRP=L.PRI+GAP

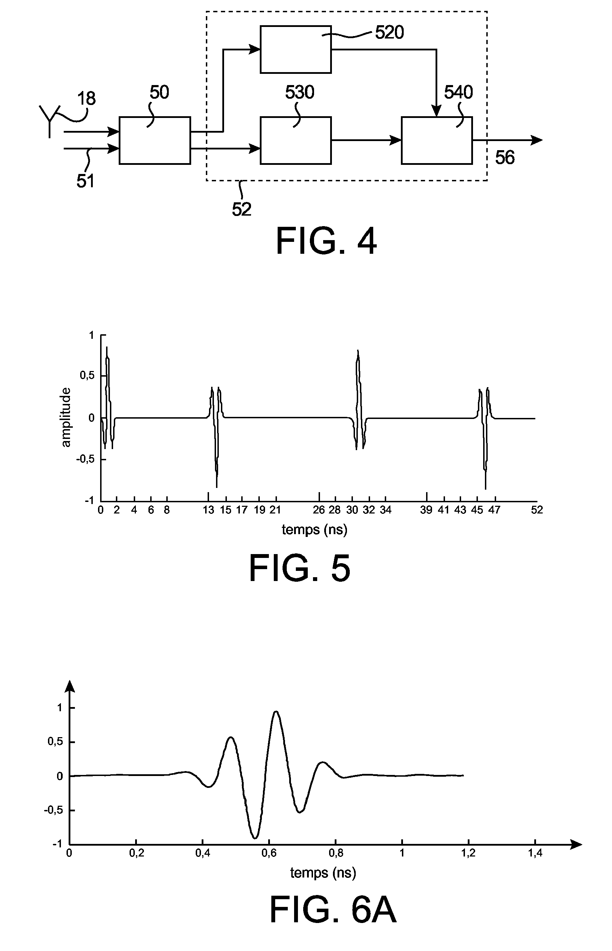

La figure 5 est un exemple d'un train d'impulsions pour le cas 4_PPM avec polarités, PRI=2ns, GAP=5ns. La séquence de symboles émise est (1, 2, 5, 8).

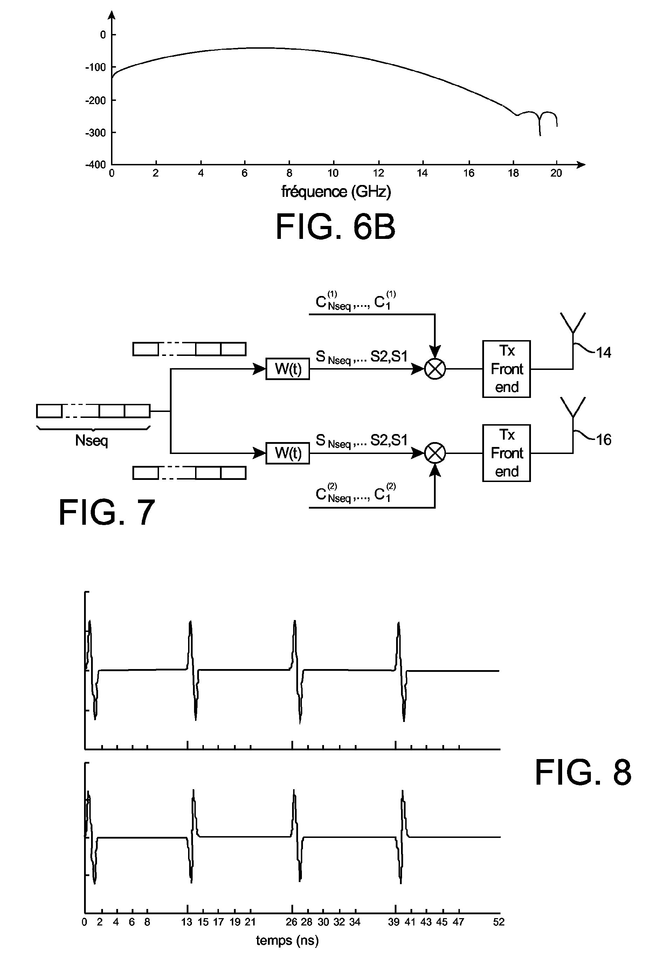

La somme des puissances émises par toutes les antennes de transmissions respecte le masque proposé par les organismes de régulation. Pour un système avec une antenne de transmission, la forme d'onde émise est représentée en figures 6A et 6B, l'amplitude de cette forme d'onde étant divisée par $\sqrt{M}$ pour un système avec M antennes de transmissions.

Les figures 6A et 6B sont un exemple d'impulsion UWB de largeur 600ps dont le spectre est centré sur 7 GHz. La bande passante à -3dB est 1.6 Ghz, le spectre est compatible avec le masque d'émission UWB Indoor imposé par la FCC.

On peut distinguer deux phases d'émissions, émission pendant le mode d'apprentissage et émission des symboles d'information.

Pendant la phase d'apprentissage, est transmise pour chaque antenne d'émission une séquence $S_1$, $S_2$, ....$S_{Nseq}$ de symboles de taille $N_{seq}$. Cette séquence est connue du récepteur et va servir à faire l'estimation du canal. Ces symboles peuvent prendre n'importe quelles valeurs : on peut par exemple considérer que tous ces symboles sont égaux et prennent la valeur « 1 » (polarité positive pendant le premier temps nominal). Cette séquence est ensuite divisée en M séquences correspondantes à M antennes de transmission.

Sur chaque branche, on fait la multiplication terme à terme de la séquence de symboles avec une séquence de code de parités. Ce code contient $N_{seq}$ éléments qui peuvent prendre les valeurs $\pm 1$.

La figure 7 représente un système de transmission avec 2 antennes d'émission 14, 16 pendant la phase d'apprentissage. w(t) correspond à un filtre de mise en forme de l'impulsion. La multiplication des deux séquences sur chaque branche est faite terme à terme.

Pour chaque antenne, on construit un code de longueur $N_{seq}$ qui est orthogonal aux codes de toutes les autres antennes. Ces codes vérifient :

$$c_1^{(i)}c_1^{(j)} + c_2^{(i)}c_2^{(j)} + ........ + c_{Nseq}^{(i)}c_{Nseq}^{(j)} = 0$$

pour i, j =1, 2,...M et $i \neq j$.

Où $c_k^{(i)}$ est le $k^{ieme}$ élément du code de la $j^{ieme}$ antenne d'émission.

La figure 8 est un exemple des impulsions émises par les deux antennes 14, 16 d'un émetteur pendant la phase d'apprentissage; le type de modulation est le 4_PPM avec polarité, PRI=2ns, GAP=5ns, $N_{seq}$=4 ; les codes des 2 antennes sont {1,1,1,1} et {1,-1,1,-1} respectivement. Les impulsions représentées en figure 8 sont le résultat de la multiplication terme à terme de la séquence d'impulsions S par les deux codes.

La construction de ces codes pour n'importe quelles valeurs de M et $N_{seq}$, telles que $M \leq N_{seq}$, peut être réalisée à partir des matrices d'Hadamard par exemple. Les raisons pour cette orthogonalité sont expliquées ultérieurement.

La figure 4 représente un schéma bloc d'un système de réception selon l'invention, pour chaque antenne de réception. Des moyens 50 de discrétisation de canal permettent de discrétiser un signal reçu 51 par une antenne de réception 18.

Des moyens 52 de traitement numérique comportent des moyens 520 d'estimation, des moyens 530 de filtrage et des moyens 540 de décision. La référence 56 désigne les symboles reconstitués.

Le système de réception 52 de la figure 4 comporte deux blocs fonctionnels ; le premier bloc 520 permet de faire l'estimation du canal et le deuxième bloc 530 permet de se servir de ces estimations pour faire la détection des symboles 51 porteurs de l'information.

Ces blocs sont réalisés en numérique. Ils sont précédés par une interface de réception radio fréquences Rx « front end » (LNA, filtre passe bande,...) et par une étape de discrétisation (moyens 50 de la figure 4).

Le récepteur reçoit les réponses composites des signaux envoyés, ces réponses étant égales à la convolution de l'impulsion (connue) émise avec le canal de propagation (de type multi trajets).

L'étage 520 d'estimation se divise en deux parties, l'estimation des réponses composites de tous les canaux concernés et le calcul de la matrice de corrélation.

Estimation des réponses composites :

Pour un système de M antennes de transmission et N antennes de réception, cette étape consiste à estimer une image discrète de $M \times N$ réponses composites. Indiquons par $h_n^{(i,j)}$ le $n^{\text{ième}}$ échantillon de la réponse composite h (i,j) entre le $i^{\text{ième}}$ antenne de transmission et $j^{\text{ième}}$ antenne de réception.

La sortie de chaque antenne est tout d'abord échantillonnée à la fréquence $N_y$ de Nyquist puis quantifiée sur $2^n$ niveaux correspondants aux n bits. Supposons que chaque trame (correspondante à une PRP) soit échantillonnée sur $N_{ech}$ échantillons tels que :

$$N_{ech} = (\text{période trame}) / (\text{période d'échantillonnage})$$

A la sortie de chaque antenne de réception 18, on aura une séquence de $N_{seq}$ trames, chacune de ces trames contenant $N_{ech}$ échantillons. Le $n^{\text{ième}}$ échantillon d'une trame, à la sortie de la $j^{\text{ième}}$ antenne, est représenté par $r_n^{(j)}$.

Pour avoir une image discrète des M canaux qui arrivent vers la $j^{\text{ième}}$ antenne, la sortie de cette antenne de réception est divisée en M branches ; le traitement sur la $i^{\text{ième}}$ branche est réalisé en calculant la moyenne suivante :

$$h_k^{(i,j)} = (\Sigma_l \, c_l^{(i)} \, \times \, r_{k + (l-1)Nech}^{(j)}) / N_{seq}$$

où $k = 1,... N_{seq}$

et où la somme est prise pour l variant de 1 à $N_{seq}$. On obtient donc, pour chaque antenne d'émission i et chaque antenne de réception j, une série de coefficients $h_k^{(i,j)}$.

Si on considère l'ensemble des antennes de réception, on aura un total de $M \times N$ estimateurs qui fonctionnent en parallèle et indépendamment l'un des autres : l'orthogonalité des codes assure que chaque réponse composite est estimée en éliminant les effets des autres antennes.

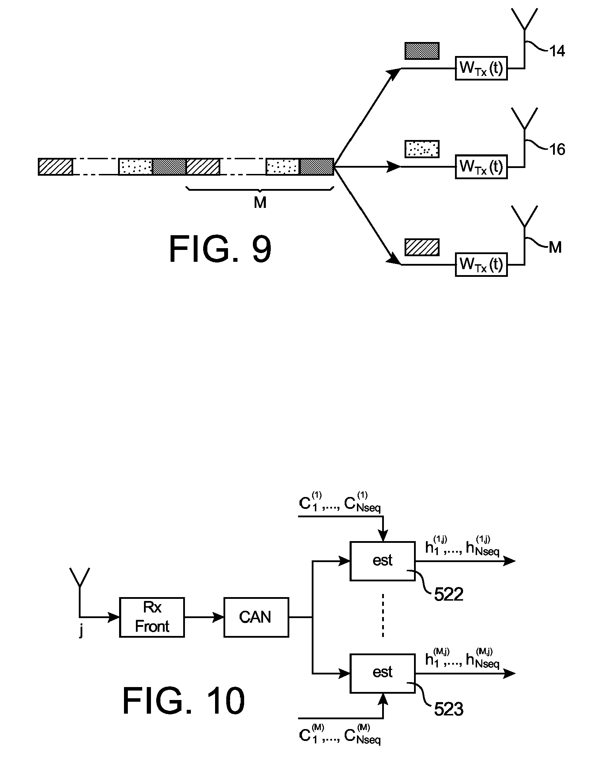

La figure 10 est un exemple de la première étape d'estimation sur la $j^{\text{ième}}$ antenne ; chaque bloc 522, 523 procède à la moyenne pondérée indiquée ci-dessus; donc l'estimateur à la sortie de chaque antenne de réception fournit les images discrètes de M canaux h(i,j), i=1,2,...M.

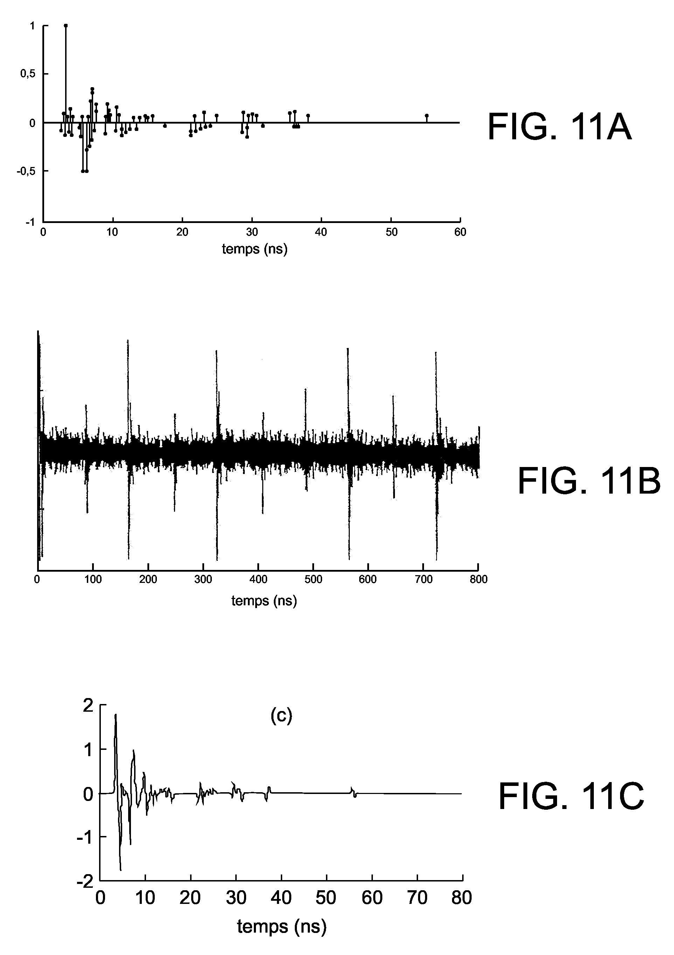

Les figure 11A - 11D représentent un exemple d'un système avec 2 antennes de transmission et une antenne de réception. La figure 11A représente les réponses impulsionnelles des 2 canaux h(1,1) (traits interrompus) et h(1,2) (traits continus); ce sont des résultats de sondage de canal dans un environnent « indoor » , les antennes de transmission étant séparées par 20 cm et la distance entre l'émetteur et le récepteur étant de 3m.

Le figure 11B représente les trames bruitées reçues pendant la phase d'apprentissage ; PRP=80ns, la longueur de la séquence d'apprentissage (Nseq) est 10 ; c(1) = {1,1,1,1,1,1,-1,-1,-1,-1} et c(2) = {1,-1,1,-1,1,-1,1,-1,1,-1}.

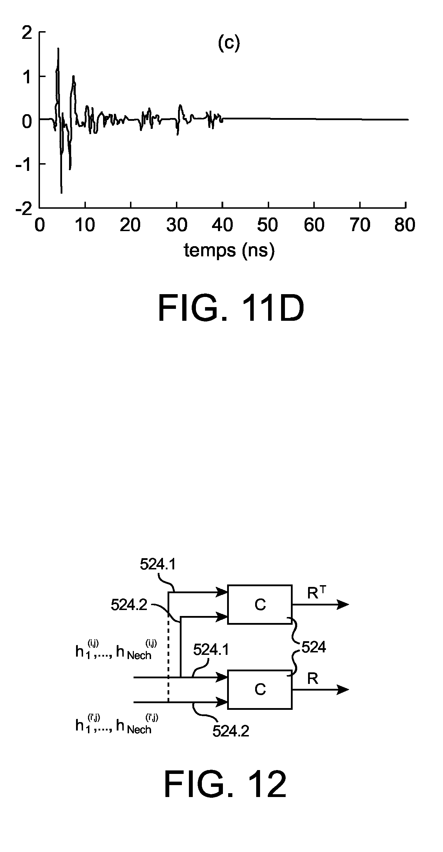

Les figures 11C et 11D représentent les estimations composites des 2 canaux à la sortie de la première partie de l'estimateur, pour une séquence de longueur 80.

Calcul de la matrice de corrélation :

Le système comporte M antennes qui transmettent des séquences de données indépendantes ; afin d'améliorer les performances du système on cherche à éliminer les interférences entre ces antennes. Les images des réponses composites ne suffisent pas ; par conséquent, la première partie ou les premiers moyens de l'estimateur est suivie par une deuxième partie ou des deuxièmes moyens qui apportent des informations sur les corrélations entre les différents canaux (i,j).

La sortie de la deuxième partie de l'estimateur sera une matrice de dimensions ($L \times M, L \times M$) pour une modulation L_PPM, avec ou sans polarité.

La construction de la deuxième partie de l'estimateur sera basée sur un bloc corrélateur 524 (figure 12). Ce bloc prend comme entrée deux séquences numériques de tailles $N_{ech}$ :

$$h_1^{(i,j)}, h_2^{(i,j)}, ...., h_{Nech}^{(i,j)} \qquad (1)$$

$$h_1^{(i',j)}, h_2^{(i',j)}, ...., h_{Nech}^{(i',j)} \qquad (2)$$

et la sortie consiste en une matrice R(i,j)(i',j) de dimensions ($L \times L$).

On désigne par NPRI le nombre d'échantillons par position nominale de modulation :

$$NPRI = PRI/(\text{période d'échantillonnage}).$$

Pour simplifier les notations, on désigne respectivement par (c (1), c (2),....c($N_{ech}$)) et (d(1),d(2),....d($N_{ech}$)) chacune des deux séquences (1) et (2) ci-dessus, à l'entrée 521-1 et 524-2 du bloc 524 respectivement ; les moyens 524 calculent d'abord les 2L-1 quantités suivantes :

$$R_0 = c(1).d(1) + c(2).d(2) + \quad c(N_{ech}).d(N_{ech})$$

$$\begin{cases} R_1 \quad = \quad c(N_{PRI}+1).d(1) \quad + \quad c(N_{PRI}+2).d(2) \quad + \\ c(N_{ech}).d(N_{ech}-N_{PRI}) \end{cases}$$

$$\vdots$$
$$\vdots$$

$$R_{L-1} \quad = \quad c((L-1).N_{PRI}+1).d(1) \quad + \quad c((L-1).N_{PRI}+2).d(2) \quad + \quad ...............c(N_{ech}).d(N_{ech}-(L-1).N_{PRI})$$

$$\begin{cases} R_{-1} \quad = \quad c(1).d(N_{PRI}+1) \quad + \quad c(2).d(N_{PRI}+2) \quad + \\ ...............c(N_{ech}-N_{PRI}).d(N_{ech}) \end{cases}$$

$$\vdots$$
$$\vdots$$

$$R_{-(L-1)} \quad = \quad c(1).d((L-1).N_{PRI}+1) \quad + \quad c(2).d((L-1).N_{PRI}+2) \quad + \quad ...............c(N_{ech}-(L-1).N_{PRI}).d(N_{ech})$$

On réalise donc un calcul de corrélation croisée, ou « cross correlation ».

Le calcul suivant est un exemple de calcul des coefficients de corrélation pour une modulation 2_PPM avec polarité, $N_{ech} = 7$ et $N_{PRI} = 2$ ; à la sortie on aura 3 paramètres de corrélation $R_{-1}$, $R_0$ et $R_1$.

$$
\begin{array}{c}
\begin{array}{ccccccc}
c_1 & c_2 & c_3 & c_4 & c_5 & c_6 & c_7 \\
d_1 & d_2 & d_3 & d_4 & d_5 & d_6 & d_7
\end{array} \\
\hline
c_1 d_1 + c_2 d_2 + c_3 d_3 + c_4 d_4 + c_5 d_5 + c_6 d_6 + c_7 d_7 = R_0
\end{array}
$$

$$
\begin{array}{c}
\begin{array}{ccccccccc}
c_1 & c_2 & c_3 & c_4 & c_5 & c_6 & c_7 & 0 & 0 \\
0 & 0 & d_1 & d_2 & d_3 & d_4 & d_5 & d_6 & d_7
\end{array} \\
\hline
c_3 d_1 + c_4 d_2 + c_5 d_3 + c_6 d_4 + c_7 d_5 = R_1
\end{array}
$$

$$
\begin{array}{c}
\begin{array}{ccccccccc}
0 & 0 & c_1 & c_2 & c_3 & c_4 & c_5 & c_6 & c_7 \\
d_1 & d_2 & d_3 & d_4 & d_5 & d_6 & d_7 & 0 & 0
\end{array} \\
\hline
c_1 d_3 + c_2 d_4 + c_3 d_5 + c_4 d_6 + c_5 d_7 = R_{-1}
\end{array}
$$

Après le calcul des (2L-1) coefficients de corrélation, le bloc 524 construit une matrice R(i,j)(i',j) de dimensions *(LxL)* qui a la forme suivante :

$$
R(i,j)(i',j) = \begin{bmatrix}
R_0 & R_{-1} & \dots & \dots & \dots & R_{-(L-1)} \\
R_1 & R_0 & R_{-1} & \dots & \dots & \dots \\
R_2 & R_1 & R_0 & R_{-1} & \dots & \dots \\
\dots & R_2 & R_1 & R_0 & R_{-1} & \dots \\
\dots & \dots & R_2 & R_1 & R_0 & R_{-1} \\
R_{L-1} & \dots & \dots & R_2 & R_1 & R_0
\end{bmatrix}
$$

Si on croise les entrées du bloc 524 ((d(1), d(2),.... d($N_{ech}$)) à l'entrée 524-1 et (c(1), c(2),.... c($N_{ech}$)) à l'entrée 524-2, on obtient à la sortie la matrice $R^T$ où $(.)^T$ correspond à la transposition d'une matrice. Cette propriété sera utilisée pour simplifier la structure de l'estimateur de canal.

Le corrélateur, dont la figure 12 est une représentation schématique, prend donc comme entrée 2 séquences numériques de longueur $N_{ech}$ et donne comme sortie une matrice de dimensions LxL. Les entrées 524-1 et 524-2 ne sont pas symétriques, un croisement de ces entrées provoque la transposition de la matrice de sortie R (i,j)(i',j).

A la sortie de chaque antenne de réception j, on a M images discrètes de M canaux qui arrivent vers cette antenne ; une matrice de corrélation basée sur le bloc 524 est calculée entre toutes ces entrées.

Si on considère la j$^{ième}$ antenne de réception, et après la première phase d'estimation, on aura les M séquences $(h_1^{(i,j)}, h_2^{(i,j)}, ...., h_{Nech}^{(i,j)})$ pour i = 1,2,...M. On appelle R(i,j)(i',j) la sortie du bloc 524 qui correspondant à la séquence $(h_1^{(i,j)}, h_2^{(i,j)}, ...., h_{Nech}^{(i,j)})$ sur l'entrée 524-1 et à la séquence $(h_1^{(i',j)}, h_2^{(i',j)}, ...., h_{Nech}^{(i',j)})$ sur l'entrée 524-2.

D'après la propriété d'inversion d'entrées du bloc 524, on peut écrire l'égalité :

$$R^{(i,j)(i',j)} = \left[ R^{(i',j)(i,j)} \right]^T$$

A partir de ces matrices R(i,j)(i',j), on peut construire la matrice R(j) (de dimensions (L.M,L.M), relative à l'antenne de réception j, qui prend la forme suivante :

$$R^{(j)} = \begin{bmatrix} R^{(1,j)(1,j)} & R^{(2,j)(1,j)} & \cdots & \cdots & R^{(M,j)(1,j)} \\ \left[R^{(2,j)(1,j)}\right]^T & R^{(2,j)(2,j)} & R^{(3,j)(2,j)} & \cdots & \cdots \\ \cdots & \left[R^{(3,j)(2,j)}\right]^T & R^{(3,j)(3,j)} & \cdots & \cdots \\ \cdots & \cdots & \cdots & \cdots & \cdots \\ \left[R^{(M,j)(1,j)}\right]^T & \cdots & \cdots & \cdots & R^{(M,j)(M,j)} \end{bmatrix}$$

En revenant aux notations initiales en $\left( h_1^{(i,j)}, h_2^{(i,j)}, \ldots, h_{Nech}^{(i,j)} \right)$ et $h_1^{(i',j)}, h_2^{(i',j)}, \ldots, h_{Nech}^{(i',j)}$, on peut dire que chacune des matrices $R^{(i,j)(i',j)}$ a des termes r(i, i', j)$_{l,c}$ (1 = 1,....L, c = 1,....L) définis par :

- pour 1 = c : r(i, i', j)$_{l,c}$ = $R_0$
- pour 1 > c : r(j)$_{l,c}$ = $R_{l-c}$
- pour 1 < c : r(j)$_{l,c}$ = $R_{-(l-c)}$
  avec :

$$R_0 = \Sigma_{k=1}^{k=Nech} h_k^{(i,j)} h_k^{(i',j)}$$

$$R_{l-c} = \Sigma_{k=1}^{k=Nech-(l-c)NPRI} h_{k+(l-c)NPRI}^{(i,j)} h_k^{(i',j)}$$

$$R_{-(l-c)} = \Sigma_{k=1}^{k=Nech-(l-c)NPRI} h_k^{(i,j)} h_{k+(l-c)NPRI}^{(i',j)}$$

où NPRI désigne le nombre d'échantillons par position nominale de modulation.
Les matrices des N antennes de réception sont ensuite ajoutées pour former la matrice R telle que :

$$R = R(1) + R(2) + \ldots + R(N).$$

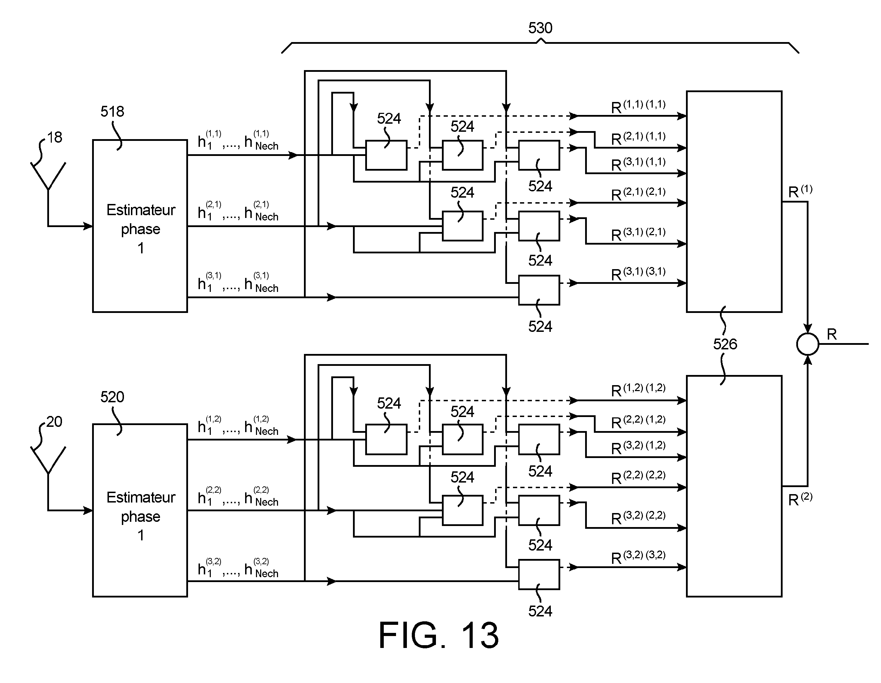

La figure 13 est une représentation schématique du deuxième étage d'estimation pour un système avec 3 antennes de transmission, 2 antennes de réception 18, 20 et L quelconque; chaque bloc « Estimateur phase 1 » 518, 520 correspond au premier étage de la phase d'estimation, c'est-à-dire à la formation des images discrètes des réponses impulsionnelles, déjà expliquée ci-dessus. A la sortie de chaque antenne, les M séquences de longueur $N_{ech}$ attaquent la deuxième partie de l'estimateur, cette deuxième partie comportant 6 blocs 524, et donnant comme sortie les matrices R(i,j)(i',j) pour i≥i' et j = 1,2. Le bloc 526 consiste à former les matrices de corrélation R(j) pour j = 1,2 comme expliqué ci-dessus (formule (3)), ces matrices étant alors de taille 2L, 2L.
La fonction de transposition est réalisée à l'intérieure du bloc 526.
Pour résumer, chaque antenne de réception est suivie par une étape d'estimation du canal. Cette étape prend comme entrée la séquence numérique à la sortie de cette antenne et donne comme sortie M séquences de longueurs

$N_{ech}$ échantillons. Une matrice de corrélation de taille ($L \times M, L \times M$) résulte, pour chaque antenne de réception, des « produits croisés » de toutes les M séquences.

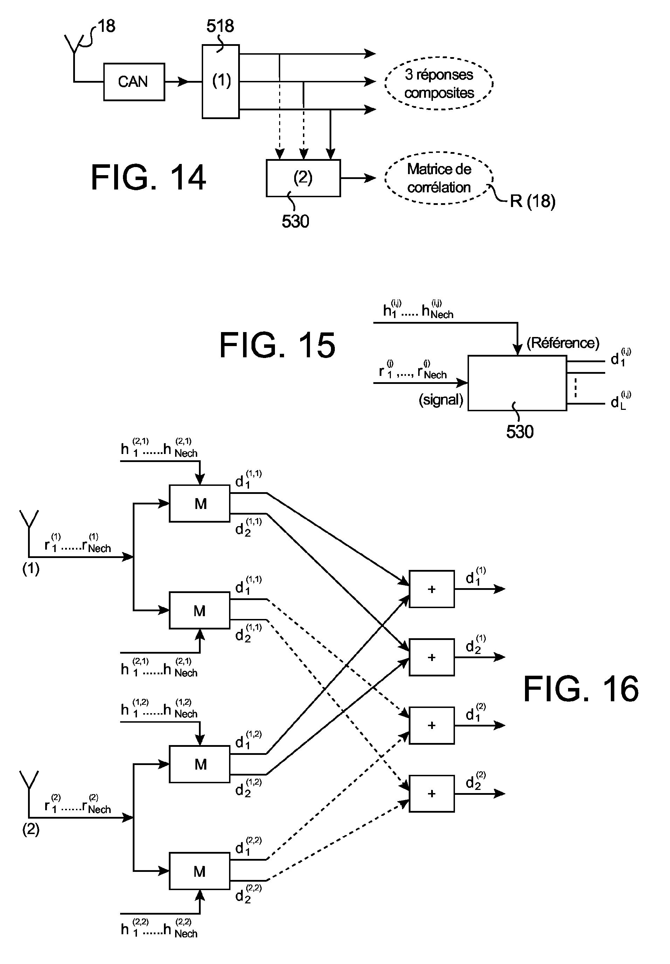

La figure 14 est une représentation schématique de la phase d'estimation du canal à la sortie de chaque antenne de réception j (pour un système avec M = 3 antennes de transmissions).

Les matrices de corrélation R(j) de toutes les antennes sont ensuite ajoutées pour former la matrice R.

Les opérations d'estimation décrites ci-dessus vont permettre au récepteur de chaque antenne de se servir de ces estimations pour faire la détection des symboles quelconques porteurs d'information. La détection est faite trame par trame ; c'est à dire qu'on détecte les symboles émis par les M antennes pendant une trame (correspondante à une PRP) indépendamment des symboles émis pendant les autres trames.

Pendant une phase de transmission de données quelconques, ou de symboles d'information, l'émission démultiplexe un flux de symboles en M flux correspondant aux M antennes de transmission 14, 16 ...., M. Les symboles demultiplexés sont ensuite modulés en position et transmis sur les M antennes, comme illustré sur la figure 9.

Cette figure 9 représente un système de transmission avec M antennes pendant une phase de transmission de données, $w_{Tx}(t)$ symbolise à la fois la modulation, la mise en forme de l'impulsion et le Tx « front end ».

Pour simplifier l'analyse, le récepteur est divisé en deux parties.

La première partie consiste à construire un vecteur de décision à partir des estimées des réponses composites ; la deuxième partie va utiliser ce vecteur ainsi que la matrice de corrélation pour faire la décision sur les symboles émis.

Construction du vecteur de décision :

Dans cette étape, le récepteur va comparer le signal reçu avec les images discrètes des réponses composites et, à partir de ces comparaisons, il va construire un vecteur de décision de longueur LxM.

La construction de cette partie est basée sur un bloc 530 du filtrage adapté (ou « Matched Filtering » en Anglais). Le fonctionnement de ce bloc est très proche du bloc 524 décrit dans la phase d'estimation.

Ce bloc prend comme entrées deux séquences numériques de longueur $N_{ech}$ et donne comme sortie L valeurs $d_1, d_2,...d_L$ ; l'entrée 530 - 1 correspond au signal reçu et l'autre entrée 530-2 correspond au signal de référence (image de la réponse composite). On désigne par (r(1), r(2),....r($N_{ech}$)) et (h(1),h(2),....h($N_{ech}$)) les séquences à l'entrée 530-1 et 530-2 respectivement. Il s'agit en fait respectivement de séquences $(r_1^{(j)}, r_2^{(j)} .... r_{Nech}^{(j)})$, signal reçu par la $i^{ème}$ antenne et $(h_1^{(i,j)}, h_2^{(i,j)},....,h_{Nech}^{(i,j)})$, déjà défini précédemment. Le bloc 530 va calculer les L quantités suivantes :

$$d_1 \quad = \quad r(1).h(1) \quad + \quad r(2).h(2) \quad +...... r(N_{ech}).h(N_{ech})$$

$$d_2 \quad = \quad r(N_{PRI}+1).h(1) \quad + \quad r(N_{PRI}+2).h(2) \quad + .................... r(N_{ech}).h(N_{ech}-N_{PRI})$$

$$\vdots$$

$$\vdots$$

$$d_L \quad = \quad r((L-1).N_{PRI}+1).h(1) \quad + \quad r((L-1).N_{PRI}+2).h(2) \quad + .................r(N_{ech}).h(N_{ech}-(L-1).N_{PRI})$$

Le calcul suivant est un exemple de calcul des coefficients de décision pour une modulation 4_PPM avec polarité, $N_{ech}$ = 7 et NPRI = 1 ; à la sortie on aura 4 paramètres de corrélation $d_1$, $d_2$, $d_3$ et $d_4$.

$$
\begin{array}{l}
\begin{array}{ccccccc}
\text{r}_1 & \text{r}_2 & \text{r}_3 & \text{r}_4 & \text{r}_5 & \text{r}_6 & \text{r}_7
\end{array}\\[4pt]
\text{x}\\[4pt]
\begin{array}{ccccccc}
\text{h}_1 & \text{h}_2 & \text{h}_3 & \text{h}_4 & \text{h}_5 & \text{h}_6 & \text{h}_7
\end{array}\\
\hline
\end{array}
$$

$$
\text{r}_1\text{h}_1 + \text{r}_2\text{h}_2 + \text{r}_3\text{h}_3 + \text{r}_4\text{h}_4 + \text{r}_5\text{h}_5 + \text{r}_6\text{h}_6 + \text{r}_7\text{h}_7 \quad = \quad \text{d}_1
$$

$$
\begin{array}{l}
\begin{array}{cccccccc}
\text{r}_1 & \text{r}_2 & \text{r}_3 & \text{r}_4 & \text{r}_5 & \text{r}_6 & \text{r}_7 & 0
\end{array}\\[4pt]
\text{x}\\[4pt]
\begin{array}{cccccccc}
0 & \text{h}_1 & \text{h}_2 & \text{h}_3 & \text{h}_4 & \text{h}_5 & \text{h}_6 & \text{h}_7
\end{array}\\
\hline
\end{array}
$$

$$
\text{r}_2\text{h}_1 + \text{r}_3\text{h}_2 + \text{r}_4\text{h}_3 + \text{r}_5\text{h}_4 + \text{r}_6\text{h}_5 + \text{r}_7\text{h}_6 \quad = \quad \text{d}_2
$$

$$
\begin{array}{l}
\begin{array}{ccccccccc}
\text{r}_1 & \text{r}_2 & \text{r}_3 & \text{r}_4 & \text{r}_5 & \text{r}_6 & \text{r}_7 & 0 & 0
\end{array}\\[4pt]
\text{x}\\[4pt]
\begin{array}{ccccccccc}
0 & 0 & \text{h}_1 & \text{h}_2 & \text{h}_3 & \text{h}_4 & \text{h}_5 & \text{h}_6 & \text{h}_7
\end{array}\\
\hline
\end{array}
$$

$$
\text{r}_3\text{h}_1 + \text{r}_4\text{h}_2 + \text{r}_5\text{h}_3 + \text{r}_6\text{h}_4 + \text{r}_7\text{h}_5 \quad = \quad \text{d}_3
$$

$$
\begin{array}{l}
\begin{array}{cccccccccc}
\text{r}_1 & \text{r}_2 & \text{r}_3 & \text{r}_4 & \text{r}_5 & \text{r}_6 & \text{r}_7 & 0 & 0 & 0
\end{array}\\[4pt]
\text{x}\\[4pt]
\begin{array}{cccccccccc}
0 & 0 & 0 & \text{h}_1 & \text{h}_2 & \text{h}_3 & \text{h}_4 & \text{h}_5 & \text{h}_6 & \text{h}_7
\end{array}\\
\hline
\end{array}
$$

$$
\text{r}_4\text{h}_1 + \text{r}_5\text{h}_2 + \text{r}_6\text{h}_3 + \text{r}_7\text{h}_4 \quad = \quad \text{d}_4
$$

La sortie de chaque antenne de réception sera divisée en M branches parallèles. Sur la $i^{\text{ème}}$ branche le signal reçu $\left( r_1^{(j)}, \ldots r_{Nech}^{(j)} \right)$ sera comparé avec l'image de la réponse composite du canal entre la $i^{\text{ème}}$ antenne de transmission et la $j^{\text{ème}}$ antenne de réception $\left( h_1^{(i,j)}, \ldots h_{Nech}^{(i,j)} \right)$. Les variables de décision à la sortie du bloc 530 seront désignées par $d_1^{(i,j)}, \ldots \ldots d_L^{(i,j)}$ (figure 15).

En reprenant les notations initiales, on a :

$$
\text{d}_1^{(i,j)} = \Sigma_{k=1}^{k=\text{Nech}} \ \text{r}_k^{(j)} \ \text{h}_k^{(i,j)}
$$

$$
\text{d}_n^{(i,j)} = \Sigma_{k=1}^{k=\text{Nech}-(n)\text{NPRI}} \ \text{r}_{k+(n)\text{NPRI}}^{(j)} \ \text{h}_k^{(i,j)}
$$

pour n = 2,....L,
où NPRI désigne le nombre d'échantillons par position nominale de modulation.

La figure 15 est un exemple de traitement sur la $i^{\text{ème}}$ branche à la sortie de la $j^{\text{ème}}$ antenne de réception pour une modulation L_PPM avec une modulation de polarité.

Le vecteur de décision, de longueur L.M, aura la forme suivante :

# EP 1 681 819 A1

$$d = \left[ \underbrace{d_1^{(1)}.......d_L^{(1)}}, \underbrace{d_1^{(2)}.......d_L^{(2)}}...........\underbrace{d_1^{(M)}.......d_L^{(M)}} \right]$$

Où $d_l^i$ correspond au l$^{\text{ième}}$ coefficient de décision correspondant à la i$^{\text{ième}}$ antenne de transmission :

$$d_l^{(i)} = d_l^{(i,1)} + d_l^{(i,2)} + .............d_l^{(i,N)}$$

La figure 16 est une représentation schématique de la première étape de détection. M = 2 antennes de transmissions, N = 2 antennes de réception et la modulation est le 2_PPM avec polarité. Les quatre images discrètes $\left( h_1^{(i,j)}.....h_{Nech}^{(i,j)} \right)$ pour i,j = 1,2 sont fournies par la phase d'estimation du canal. Les sorties des filtres adaptés 530 sont convenablement ajoutées. Il en résulte est un vecteur de taille L.M = 4.

L'étape de décision va utiliser le vecteur de décision et la matrice de corrélation (fournie par l'estimateur 520 du canal) pour détecter les symboles émis par les M antennes pendant une PRP.

Cette étape commence par le calcul du vecteur « a » tel que :

$$a = R^{-1} \times d$$

Où d correspond au vecteur de décision de longueur LM (fourni par la première étape de détection), R est la matrice de corrélation de dimensions (LM,LM) (fourni par la deuxième étape de l'estimation du canal), et R$^{-1}$ est l'inverse de la matrice R.

Le vecteur a prend la forme suivante :

$$a = \left[ a^{(1)}, a^{(2)},....a^{(M)} \right]$$

$$= \left[ \underbrace{a_1^{(1)}.......a_L^{(1)}} \underbrace{a_1^{(2)}.......a_L^{(2)}}...........\underbrace{a_1^{(M)}.......a_L^{(M)}} \right]$$

Où $a^{(m)} = \left[ a_1^{(m)}.......a_L^{(m)} \right]$ est un vecteur de décision correspondant au symbole émis par la m$^{\text{ième}}$ antenne de transmission (m = 1,2,...M).

La position nominale de modulation et la polarité du symbole émis par la m$^{\text{ième}}$ antenne sont ensuite choisis en suivant la règle:

$$\hat{\Delta}^{(m)} = \hat{l} = \underset{l=1,2,\ldots L}{\arg\max} \left| a_l^{(m)} \right|$$

$$\hat{p}^{(m)} = sign(a_l^{(m)})$$

En d'autres termes, la position du maximum du module de a (m) correspond à la position nominale de modulation, et le signe de ce maximum correspond à la polarité du symbole émis par la m$^{ième}$ antenne de transmission.

Par exemple dans le cas de modulation 4_PPM avec polarité pour 2 antennes de transmission, le vecteur a = [1.2 0.5 -0.1 0.01, -0.8 -1.5 0.2 0.5] indique que la première antenne émet dans la position 1 avec une polarité positive et la deuxième antenne émet dans la position 2 avec une polarité négative ; donc les symboles émis sont {s1,s4}.

L'inversion de la matrice R est toujours possible parce que cette matrice n'est jamais mal conditionnée. Cette propriété est assurée grâce à la bande passante du canal (quelques GHz) qui donne des fonctions de corrélation proches des diracs.

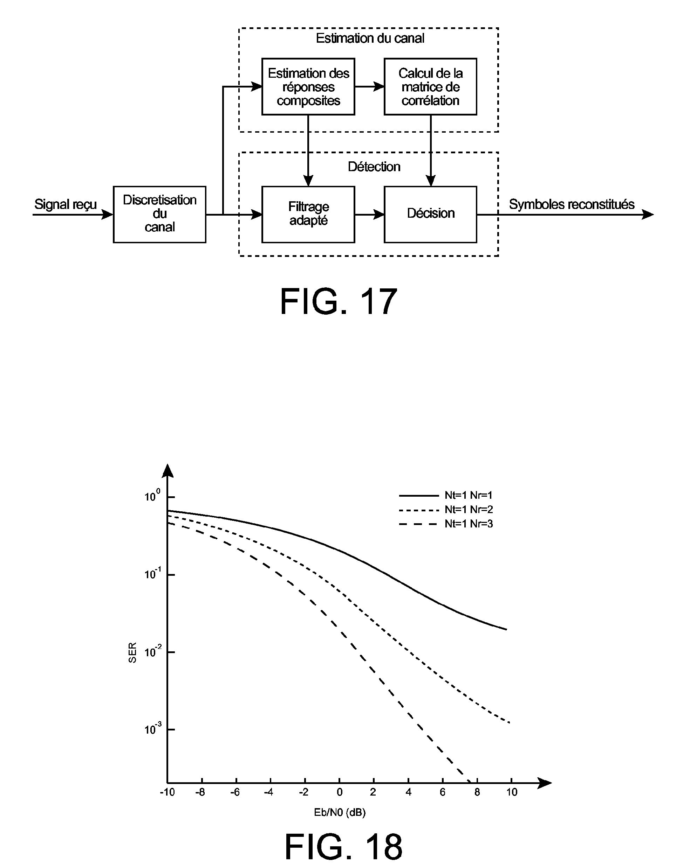

La figure 17 est une représentation schématique du récepteur. Le premier étage de l'estimateur sert à construire des signaux de référence pour la corrélation (M.N signaux). Le deuxième étage consiste à calculer la matrice de corrélation qui va permettre de faire la détection multi antennes.

Le premier étage du détecteur consiste à comparer les signaux reçus avec les signaux de référence pour chaque antenne de réception, cet étage est équivalent au filtrage adapté dans les systèmes bandes étroites. Le deuxième étage du détecteur réalise l'étape de décision.

Le bloc « estimation du canal » est activé pendant la phase d'apprentissage et le bloc « détection » est activé pendant la phase de démodulation des symboles d'information émis.

Dans certain cas une trame peut être répétée plusieurs fois pour un même symbole, côté émetteur. Dans ce cas, un étage d'intégration cohérente est ajouté juste après l'étage de discrétisation.

On va supposer que la complexité du récepteur peut être approchée par le nombre de multiplication ; le nombre de multiplication par bloc de réception (figure 19) peut être calculé de la façon suivante :

Estimation des réponses composites :

N1 = Nombre de multiplications par symbole d'apprentissage

$$= \; N \times M \times N_{ech} \; .$$

- Calcul de la matrice de corrélation :

N2 = Nombre de multiplication par séquence d'apprentissage

$$= \; N \times \frac{M \times (M+1)}{2} \times \left[ (2L-1) \times N_{ech} - N_{PRI} \times L \times (L-1) \right] .$$

- Filtrage adapté :

$$N3 = \text{Nombre de multiplications par M symboles d'information}$$

$$= N \times M \times \left[ L \times N_{ech} - N_{PRI} \times \frac{L \times (L-1)}{2} \right]$$

- Décision:

$$N4 = \text{Nombre de multiplications par M symboles d'information}$$

$$\approx (L \times M)^3 + (L \times M)^2$$

Exemple de paramètres :

- Modulation 4_PPM avec polarité (L = 4).
- M = N = 3.
- PRP = 10 ns (applications hautes débit).
- PRI = 1ns.
- Signal dans la bande [3GHz, 5GHz] $\rightarrow$ fech = fNyquist = 10GHz $\rightarrow N_{ech}$ = 100 et NPRI = 10.
- Séquence d'apprentissage de longueur $N_{seq}$ = 100.

$$N1 = 900 \;;\; N2 = 10440 \;;\; N3 = 6660 \;;\; N4 = 1872.$$

Il faut signaler que la multiplication pendant la phase d'estimation des réponses composites (N1) est faite avec une séquence de $\pm 1$, donc cette multiplication peut être simplifiée à des additions et des soustractions.

En prenant cette remarque en considération, l'opération la plus coûteuse en termes de nombre de multiplications est l'étage du filtrage adapté. Mais il faut signaler que ces filtrages sont faits d'une façon parallèle et, donc, ils n'introduisent pas de retards de détection.

Le système proposé selon l'invention permet la détection des signaux modulés en position et en polarité, par conséquent le débit binaire est augmenté d'un facteur $\log_2(2 \times L)$ par rapport à [15].

En plus, la complexité du récepteur est optimisée en profitant des propriétés de la fonction d'inter corrélation. En effet, $\frac{1}{2}NM(M\text{-}1)$ blocs de corrélations 524 (figure 12) ont étés enlevées sur l'architecture proposée sur la figure 13 en profitant de la symétrie de la fonction d'inter corrélation.

L'estimation des réponses composites des NM canaux est faite en parallèle, grâce aux codes orthogonaux introduits pendant la phase d'apprentissage. La perte de débit introduite par la phase d'apprentissage est divisée par M en comparaison avec un système SISO.

L'utilisation de M antennes à la transmission permet d'augmenter le débit du système par un facteur M, tandis que l'augmentation du nombre d'antennes à la réception permet d'améliorer la performance à un débit fixe ou, d'une manière équivalente, d'augmenter le débit (en réduisant la PRP) pour un niveau de performance donné.

La figure 20 illustre la probabilité d'erreur par symbole en fonction du rapport signal sur bruit. La modulation

## EP 1 681 819 A1

est la 4_PPM avec polarité et le système émet à un débit de 750Mbits/s. Le système SISO (M=N=1) souffre d'un niveau élevé d'interférence et la probabilité d'erreur ne peut jamais atteindre le $10^{-2}$. Les améliorations introduites par 2 et 3 antennes à la réception apparaissent.

Selon l'invention, on établit donc d'abord, lors d'une phase d'apprentissage, une estimation du canal entre les antennes émettrices et les antennes réceptrices.

A cette fin, des séquences d'impulsions connues sont envoyées, affectées d'un code, les codes de deux antennes différentes étant orthogonaux entre eux.

Une estimation de canal met en oeuvre :

- pour chaque antenne : le calcul de M estimateurs,
- le calcul d'une matrice R de corrélation, portant information sur les corrélations des différents canaux.

Lors de la réception d'un signal quelconque, en général modulé PPM, un vecteur de décision est calculé, à partir du signal reçu, à l'aide des réponses composites.

Le vecteur de décision et la matrice de corrélation permettent de calculer un vecteur de décision inversé, dont on peut tirer la position nominale de modulation, ainsi que la polarité du symbole émis.

Un dispositif mettant en oeuvre l'invention sera réalisé à l'aide de moyens de digitalisation 50, et des moyens 52 de traitement numérique du signal reçu et numérisé. Les divers éléments 520, 530, 540 peuvent être réalisés à l'aide des éléments contenus dans le document [4] cité à la fin de la présente description, ce document concernant des systèmes mono-antenne.

**Références bibliographiques**

1. www.fcc.gov.

3. Moe Z. Win and R.A. Scholtz, « On the energy capture of ultrawide bandwidth signals in dense multipath environments », IEEE communication letters vol. 2, September 1998, pp. 245-247.

4. Brevet Européen EP 1 298 811 A1

5. Brevet US 2003/0058963 A1

6. I.E. Tetlar, "Capacity of multi-antenna Gaussian channels", Europ. Trans. Telecommun., vol. 10, pp. 585-595, Nov. 1999.

7. S.M. Alamouti, "A simple transmit diversity technique for wireless communications", IEEE journal on select areas in communications, vol. 16, pp. 1451-1458, Oct. 1998.

8. V.Tarokh, H. Jafarkhani, and A.R. Calderbank ," Space-time block codes from orthogonal design", IEEE transactions on information theory, vol. 45, pp. 1456-1466, July 1999.

9. M.O. Damen, K. Abed-Meraim, and J.C. Belfiore, « Diagonal Algebraic Space-Time Block codes », IEEE Transactions on Information Theory, vol. 48, pp.628-636 March 2002.

10. Gerard J. Foschini, "Layered space-time architecture for wireless communication in a fading environment when using multi-element antennas", Technical journal, Bell Labs, 1996.

11. G. Rayleigh and J. Cioffi, « Spatio-Temporal Coding for wireless communications », IEEE transactions on communications,pp. 357-366, March 1998.

12. N. Al-Dhabir, « Frequency-Domain Equalisation for transmit diversity signaling over frequency selective fading channels », IEEE communications letters, July 2001.

13. Liuqing Yang and Georgios B. Giannakis, "Space-time coding for impulse radio", IEEE conference on ultra wideband systems and technologies, pp 235-239, 2002.

14. Liuqing Yang and Georgios B. Giannakis, "Analog space-time coding for multi-antenna ultra-wideband transmissions", IEEE transactions on communications ,to appear 2004.

15. Martin Weisenhorn and Walter Hirt, "Performance of binary antipodal signaling over the indoor UWB MIMO channel", IEEE conference on communications, vol. 4, pp.2872-2878, May 2003.

16. Jurgen Kunisch and Jorg Pamp, "An ultra-wideband space -variant multipath indoor radio channel model", IEEE conference on ultra wideband systems and technologies ,pp. 290-294, Nov. 2003.

**Revendications**

1. Procédé d'apprentissage d'un système de communication ultra - large bande à M (M≥2) antennes (14, 16) d'émission et N (N ≥ 1) antennes (18,....) de réception et dans lequel l'information est modulée sur L positions possibles, comportant :

   a) transmettre une série de $N_{seq}$ impulsions d'apprentissage, de chaque antenne d'émission (14, 16) vers toutes les antennes de réception,

   b) pour chaque antenne de réception j, estimer les M réponses composites $(h_1^{(i,j)}, h_2^{(i,j)},...., h_{Nech}^{(i,j)})$ des séries d'impulsions émises qui arrivent à cette antenne de réception j, chaque réponse étant égale à la convolution de la série d'impulsions d'apprentissage émises avec la fonction de transfert du canal de propagation de l'antenne d'émission i vers l'antenne de réception j, chaque réponse composite étant estimée en éliminant les effets des autres antennes,
   c) estimer les corrélations (R) entre les différents canaux.

2. Procédé selon la revendication 1, chaque série d'impulsions émise par une antenne d'émission résultant du produit terme à terme d'une séquence connue $(S_1, S_2, ....S_{Nseq})$ et commune à toutes les antennes d'émission et d'un code $(c_k^{(i)})$ (k = 1, 2,...$N_{seq}$) de parité propre à chaque antenne d'émission i, les codes de parité étant orthogonaux deux à deux entre eux.

3. Procédé selon la revendication 2, l'étape b) comportant, pour chaque canal définit par une antenne d'émission i (i=1,..., M) et arrivant vers l'antenne de réception j :

   - un échantillonnage en $N_{ech}$ échantillons de chacune des $N_{seq}$ trames d'impulsions reçues, $r_k^{(i)}$ désignant le $k^{ième}$ échantillon du signal reçu par la $j^{ième}$ antenne,
   - puis le calcul de la moyenne

$$h_n^{(i,j)} = (\Sigma_{k=1}^{k=Nseq} c_k^{(i)} \times r_{n+(k-1)Nech}^{(j)})/N_{seq}$$

4. Procédé selon l'une des revendications 1 à 3, l'étape c) comportant l'estimation d'une matrice de corrélation (R(j)) pour chaque antenne de réception, les N matrices étant ensuite ajoutées pour former une matrice de corrélation totale (R).

5. Procédé selon l'une des revendications 1 à 4, l'étape c) étant réalisée à partir des M réponses composites.

6. Procédé selon la revendication 4 ou 5, comportant :

   - pour chaque antenne de réception j le calcul d'une matrice de corrélation pour chaque paire de canaux (i,j), (i',j), où i et i' désignent des antennes d'émission quelconques,
   - pour chaque antenne de réception j, le calcul d'une la matrice de corrélation R(j),
   - le calcul d'une matrice de corrélation totale (R) en sommant les matrices de corrélation individuelles R(j) de chaque antenne de réception j.

7. Procédé selon la revendication 6, la matrice R(j) étant de taille (LxM, LxM), et étant constituée des matrices $R^{(\alpha,j)(\beta,j)}$

$$R^{(j)} = \begin{bmatrix} R^{(1,j)(1,j)} & R^{(2,j)(1,j)} & ... & ... & R^{(M,j)(1,j)} \\ \left[R^{(2,j)(1,j)}\right]^T & R^{(2,j)(2,j)} & R^{(3,j)(2,j)} & ... & ... \\ ... & \left[R^{(3,j)(2,j)}\right]^T & R^{(3,j)(3,j)} & ... & ... \\ ... & ... & ... & ... & ... \\ \left[R^{(M,j)(1,j)}\right]^T & ... & ... & ... & R^{(M,j)(M,j)} \end{bmatrix}$$

Chacune des matrices $R^{(i,j)(i',j)}$ ayant des termes $r(i, i', j)_{l,c}$ (l = 1,....L, c = 1,....L) définis par :

- pour 1 = c : $r(i, i', j)_{l,c} = R_0$
- pour 1 > c : $r(j)_{l,c} = R_{l-c}$
- pour 1 < c : $r(j)_{l,c} = R_{-(l-c)}$

avec :

$$R_0 = \Sigma_{k=1}{}^{k=Nech} h_k{}^{(i,j)} h_k{}^{(i',j)}$$

$$R_{l-c} = \Sigma_{k=1}{}^{k=Nech-(l-c)NPRI} h_{k+(l-c)NPRI}{}^{(i,j)} h_k{}^{(i',j)}$$

$$R_{-(l-c)} = \Sigma_{k=1}{}^{k=Nech-(l-c)NPRI} h_k{}^{(i,j)} h_{k+(l-c)NPRI}{}^{(i',j)}$$

où NPRI désigne le nombre d'échantillons par position nominale de modulation.

**8.** Procédé de détection de signaux, transmis par des antennes de transmission d'un système de communication ultra - large bande comportant M (M ≥ 2) antennes (14, 16) de transmissions et N (N ≥ 2) antennes (18,....) de réception et dans lequel l'information est modulée sur L positions possibles, comportant pour chaque antenne de réception j, comportant:

a) comparer les réponses composites $\left(h_1^{(i,j)}, h_2^{(i,j)},...., h_{Nech}^{(i,j)}\right)$ obtenues, pour un signal connu, pour chaque canal défini par une antenne d'émission i et une antenne de réception j, avec les séries d'impulsions $\left(r_1^{(j)},......r_{Nech}^{(j)}\right)$ reçues par cette antenne de réception j, chaque impulsion reçue étant égale à la convolution d'une impulsion émise avec la fonction de transfert du canal de propagation de l'antenne d'émission i vers l'antenne de réception j,

b) construire un vecteur d de décision de longueur L.M,

c) estimer les symboles émis par les antennes de transmission à partir du vecteur de décision et de corrélations (R) entre les différents canaux.

**9.** Procédé selon la revendication 8, dans lequel l'étape b) comporte, pour chaque canal (i,j), le calcul de L variables de décision $d_1^{(i,j)}, d_2^{(i,j)},....., d_L^{(i,j)}$, où :

$$d_1{}^{(i,j)} = \Sigma_{k=1}{}^{k=Nech} r_k{}^{(j)} h_k{}^{(i,j)}$$

$$d_n{}^{(i,j)} = \Sigma_{k=1}{}^{k=Nech-(n)NPRI} r_{k+(n)NPRI}{}^{(j)} h_k{}^{(i,j)}$$

pour n = 2,....L,

où NPRI désigne le nombre d'échantillons par position nominale de modulation,

puis le calcul d'un coefficient de décision $d_l^{(i)} = d_l^{(i,1)} + d_l^{(i,2)} + \ldots\ldots\ldots d_l^{(i,N)}$ , et d'un vecteur de décision

$$d = \left[ \underbrace{d_1^{(1)} \ldots\ldots d_L^{(1)}}, \underbrace{d_1^{(2)} \ldots\ldots d_L^{(2)}} \ldots\ldots \underbrace{d_1^{(M)} \ldots\ldots d_L^{(M)}} \right]$$

Où $d_l^i$ correspond au l$^{\text{ième}}$ coefficient de décision correspondant à la i$^{\text{ième}}$ antenne de transmission.

**10.** Procédé selon la revendication 8 ou 9, comportant le calcul d'un vecteur a :

$$a \ = \ R^{-1} x d,$$

où R est la matrice de corrélation de dimensions (LM, LM) du système de communication.

**11.** Procédé selon la revendication 10, dans lequel on détermine en outre la position nominale de modulation et la polarité du symbole émis par chaque antenne d'émission ou de transmission.

**12.** Procédé selon la revendication 11, la position nominale de modulation et la polarité du symbole émis par la m$^{\text{ième}}$ antenne étant déterminés respectivement par la position du maximum du module de a(m), et par le signe de ce maximum, où a (m) est le vecteur de décision correspondant au symbole émis par la m$^{\text{ième}}$ antenne.

**13.** Procédé selon l'une des revendications 10 à 12, dans lequel le vecteur a prend la forme suivante :

$$a = \left[ a^{(1)}, a^{(2)}, \ldots a^{(M)} \right]$$

$$= \left[ \underbrace{a_1^{(1)} \ldots\ldots a_L^{(1)}} \underbrace{a_1^{(2)} \ldots\ldots a_L^{(2)}} \ldots\ldots \underbrace{a_1^{(M)} \ldots\ldots a_L^{(M)}} \right]$$

Où $a^{(m)} = \left[ a_1^{(m)} \ldots\ldots a_L^{(m)} \right]$ est un vecteur de décision correspondant au symbole émis par le m$^{\text{ième}}$ antenne de transmission (m = 1, 2,...M).

**14.** Procédé de communication, de signaux modulés PPM, de type ultra - large bande, à l'aide de M antennes de transmissions et N antennes de réception, comportant :

  - un procédé d'apprentissage selon l'une des revendications 1 à 7,
  - une phase de transmission d'un flux de symboles de données,

  - puis, pour tout signal transmis, et pour chaque antenne de réception j, une comparaison des réponses composites $\left( h_1^{(i,j)}, h_2^{(i,j)}, \ldots, h_{Nech}^{(i,j)} \right)$ avec des séries $\left( r_1^{(j)}, \ldots\ldots r_{Nech}^{(j)} \right)$ d'impulsions reçues par cette antenne de réception j, chaque impulsion reçue réponse étant égale à la convolution d'une impulsion émise avec la fonction de transfert du canal de propagation de l'antenne d'émission i vers l'antenne de réception j,

- pour chaque canal (i, j), le calcul de L variables de décision $d_1^{(i,j)}, d_2^{(i,j)}, \ldots, d_L^{(i,j)}$, où :

$$d_1{}^{(i,j)} = \Sigma_{k=1}{}^{k=Nech}\ r_k{}^{(j)}\ h_k{}^{(i,j)}$$

$$d_n{}^{(i,j)} = \Sigma_{k=1}{}^{k=Nech-(n)NPRI}\ r_{k+(n)NPRI}{}^{(j)}\ h_k{}^{(i,j)}$$

pour n = 2,....L,

où NPRI désigne le nombre d'échantillons par position nominale de modulation,

puis le calcul d'un coefficient de décision $d_l^{(i)} = d_l^{(i,1)} + d_l^{(i,2)} + \ldots\ldots\ldots d_l^{(i,N)}$, et d'un vecteur de décision

$$d = \left[ \underbrace{d_1^{(1)} \ldots\ldots d_L^{(1)}}, \underbrace{d_1^{(2)} \ldots\ldots d_L^{(2)}} \ldots\ldots \underbrace{d_1^{(M)} \ldots\ldots d_L^{(M)}} \right]$$

Où $d_l^i$ correspond au $l^{\text{ième}}$ coefficient de décision correspondant à la $i^{\text{ième}}$ antenne de transmission.

**15.** Procédé selon la revendication 14, la phase d'apprentissage comportant :

- la transmission d'une séquence par M canaux vers les M antennes de transmission,
- la multiplication terme à terme de la séquence de chaque canal avec une séquence de codes de parités, les codes étant orthogonaux deux à deux entre eux.

**16.** Procédé selon l'une des revendications 8 à 15, la phase de transmission d'un flux de symboles comportant :

- le démultiplexage du flux de symboles en M flux correspondant aux M antennes de transmission,
- la modulation en position des symboles et leur transmission aux M antennes de transmission.

**17.** Procédé selon l'une des revendications 1 à 16, la séparation entre les antennes permettant une décorrélation entre les canaux.

**18.** Procédé selon la revendication 17, la séparation d entre deux antennes étant telle que d/λ > 0,5, où λ est la longueur d'onde correspondant à fréquence centrale.

**19.** Système de communication, de type ultra - large bande, comportant M antennes d'émission (M≥ 2) et N antennes de réception (N≥ 1), et :

- des moyens (520) pour estimer, pour chaque antenne de réception j, les réponses composites $(h_1^{(i,j)}, h_2^{(i,j)}, \ldots, h_{Nech}^{(i,j)})$ de séries d'impulsions émises qui arrivent à cette antenne de réception j, chaque réponse étant égale à la convolution de la série d'impulsions émises avec la fonction de transfert du canal de propagation de l'antenne d'émission i vers l'antenne de réception j, chaque réponse composite étant estimée en éliminant les effets des autres antennes,
- des moyens (520) pour estimer les corrélations (R) entre les différents canaux.

- des moyens (530, 540) pour estimer un symbole émis par une antenne d'émission en fonction d'un signal

reçu $\left(r_1^{(j)},......r_{Nech}^{(j)}\right)$, des réponses composites et des corrélations.

**20.** Système de communication selon la revendication 19, les moyens pour estimer un symbole émis comportant en outre des moyens permettant, pour chaque canal i (i=1,..., M) arrivant vers l'antenne de réception j, le calcul de L variables de décision $d_1^{(i,j)},d_2^{(i,j)},.....,d_L^{(i,j)}$, où :

$$d_1^{(i,j)} = \Sigma_{k=1}^{k=Nech} r_k^{(j)} h_k^{(i,j)}$$

$$d_n^{(i,j)} = \Sigma_{k=1}^{k=Nech-(n)NPRI} r_{k+(n)NPRI}^{(j)} h_k^{(i,j)}$$

pour n = 2,....L,
où NPRI désigne le nombre d'échantillons par position nominale de modulation,
puis le calcul d'un coefficient de décision $d_l^{(i)} = d_l^{(i,1)} + d_l^{(i,2)} + .............d_l^{(i,N)}$, et d'un vecteur de décision

$$d = \left[ \underbrace{d_1^{(1)}.......d_L^{(1)}}, \underbrace{d_1^{(2)}.......d_L^{(2)}} ..........\underbrace{d_1^{(M)}.......d_L^{(M)}} \right]$$

Où $d_l^i$ correspond au $l^{ième}$ coefficient de décision correspondant à la $i^{ième}$ antenne de transmission.

**21.** Système de communication selon la revendication 19 ou 20, comportant des moyens pour calculer un vecteur a :

$$a = R^{-1}xd,$$

où R est la matrice de corrélation de dimensions (LM, LM) du système de communication.

**22.** Système de communication selon la revendication 21, comportant des moyens pour déterminer en outre la position nominale de modulation et la polarité du symbole émis par chaque antenne d'émission ou de transmission.

# FIG. 1

Réponses composites          Signal reçu

# FIG. 2

Analogique          FIG. 3          Numerique

FIG. 4

FIG. 5

FIG. 6A

## FIG. 6B

## FIG. 7

## FIG. 8

## FIG. 9

$W_{Tx}(t)$ — 14

$W_{Tx}(t)$ — 16

$W_{Tx}(t)$ — M

M

## FIG. 10

$C_1^{(1)},..., C_{Nseq}^{(1)}$

$h_1^{(1,j)},..., h_{Nseq}^{(1,j)}$

est — 522

Rx Front

CAN

j

est — 523

$h_1^{(M,j)},..., h_{Nseq}^{(M,j)}$

$C_1^{(M)},..., C_{Nseq}^{(M)}$

FIG. 11A

FIG. 11B

FIG. 11C

(c)

FIG. 11D

FIG. 12

FIG. 13

FIG. 14

FIG. 15

FIG. 16

FIG. 17

FIG. 18

**Office européen des brevets**

## RAPPORT DE RECHERCHE EUROPEENNE

Numéro de la demande

EP 06 10 0192

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | RJEILY C A ET AL: "Performance analysis of space-time coding over ultra wideband channels" 2004 INTERNATIONAL CONFERENCE ON SIGNAL PROCESSING AND COMMUNICATIONS (SPCOM) (IEEE CAT. NO.04EX926) IEEE PISCATAWAY, NJ, USA, 2004, pages 315-319, XP002344942 ISBN: 0-7803-8674-4 * le document en entier * ----- | 1-22 | INV. H04L25/02 H04L25/49 H04L1/06 |
| X | US 2003/125090 A1 (ZEIRA ARIELA) 3 juillet 2003 (2003-07-03) * page 1, colonne de droite, alinéa 15 - page 3, colonne de gauche, alinéa 27 * * page 4, colonne de gauche, alinéa 49 * * revendications 1,7 * ----- | 1,2,8,19 | |
| A | EP 1 482 648 A (COMMISSARIAT A L'ENERGIE ATOMIQUE) 1 décembre 2004 (2004-12-01) * colonne 4, alinéa 21 * * colonne 5, alinéa 30 * * colonne 9, alinéa 66 - alinéa 68 * * colonne 10, alinéa 74 - colonne 11, ligne 6 * ----- | 1-22 | DOMAINES TECHNIQUES RECHERCHES (IPC) H04L |
| A | BACCARELLI E ET AL: "A simple multi-antenna transceiver for ultra wide band based 4GWLANs" WIRELESS COMMUNICATIONS AND NETWORKING CONFERENCE, 2004. WCNC. 2004 IEEE ATLANTA, GA, USA 21-25 MARCH 2004, PISCATAWAY, NJ, USA,IEEE, vol. 3, 21 mars 2004 (2004-03-21), pages 1782-1787, XP010708212 ISBN: 0-7803-8344-3 * le document en entier * ----- -/-- | 1-22 | |

Le présent rapport a été établi pour toutes les revendications

| Lieu de la recherche | Date d'achèvement de la recherche | Examinateur |
|---|---|---|
| Munich | 12 avril 2006 | Schiffer, A |

EPO FORM 1503 03.82 (P04C02)

**EP 1 681 819 A1**

**Office européen des brevets**

## RAPPORT DE RECHERCHE EUROPEENNE

Numéro de la demande

EP 06 10 0192

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | HELIOT F ET AL: "Performance of space-time block coding and space-time trellis coding for impulse radio" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, vol. 5, 29 novembre 2004 (2004-11-29), pages 3225-3229, XP010758316 ISBN: 0-7803-8794-5 * le document en entier * ----- | 1-22 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 12 avril 2006 | Schiffer, A |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 10 0192

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-04-2006

| Document brevet cité au rapport de recherche | Date de publication | Membre(s) de la famille de brevet(s) | Date de publication |
|---|---|---|---|
| US 2003125090 A1 | 03-07-2003 | AUCUN | |
| EP 1482648 A | 01-12-2004 | AT 316717 T<br>FR 2855684 A1<br>US 2005041725 A1 | 15-02-2006<br>03-12-2004<br>24-02-2005 |

EPO FORM P0460

Pour tout renseignement concernant cette annexe : voir Journal Officiel de l'Office européen des brevets, No.12/82